# EUROPEAN PATENT APPLICATION

(11) **EP 3 527 648 A1**
(43) Date of publication of application: **21.08.2019**
(21) Application number: 17859959.3
(22) Date of filing: 13.10.2017
(51) Int. Cl.: C10L 5/44, C10L 9/00, B27J 7/00, B27L 11/00

(54) **METHOD FOR REMOVING CHLORINE AND INORGANIC COMPONENTS FROM EUCALYPTUS SSP. WOOD FOR PRODUCING SOLID BIOFUEL, IN THE FORM OF "PELLETS" OR SOME OTHER FORM**

(30) Priority: 13.10.2016 BR 102016023862
(71) Applicant: Escobar Farago, Javier, 05466-030 Sao Paulo - SP (BR)
(72) Inventor: GOLDEMBERG, Jose, 05468-140 Sao Paulo - SP (BR); SAUER, lido, 05580-095 Sao Paulo - SP (BR); ESCOBAR FARAGO, Javier, 05580-095 Sao Paulo - SP (BR)
(74) Representative: De Anna, Pier Luigi
(86) International application number: PCT/BR2017/000122
(87) International publication number: WO 2018/068111

(57) **Abstract**

**"METHOD FOR REMOVING CHLORINE AND INORGANIC COMPONENTS FROM EUCALYPTUS SSP. WOOD FOR PRODUCING SOLID BIOFUEL, IN THE FORM OF "PELLETS" OR SOME OTHER FORM".** Eucalyptus produced in tropical regions tends to contain higher concentrations of chlorine and other inorganics in levels higher than those allowed by international standards, such as Enplus and similar, for the production of solid biofuels.

The present invention relates to the removal of chlorine and other inorganic compounds using mechanical and chemical pretreatment processes, including milling and leaching, prior to the production of biofuels in the form of pellets or another form. This method allows the reduction of toxic gases such as dioxins and corrosive gases resulting in the combustion of solid biofuels.

## Description

The present invention relates to a method for the removal of inorganic substances, especially chlorine, sodium, potassium, calcium, and magnesium, from biomass of the genus Eucalyptus ssp. for production of solid biofuel in the form of pellets or other forms, with low ash and chlorine content, in order to meet the requirements of the ENplus standard, or similar, thus allowing the product access to international market of wood pellets and other solid biofuels; this method is capable of eliminating / minimizing the rates of chlorine and alkali metals that are negatively correlated with the high ash content resulting from the burning of biomass fuels, responsible for equipment failure and operational difficulties in energy conversion facilities thermochemistry and also by the emission of toxic gases, such as chlorine and its compounds, which during combustion form dioxins, organochlorine substances that can damage human health, a limiting factor for the use of biomass in bioenergy production.

The high price of fossil fuels in the world and the interest in replacing fossil energy sources with others based on renewable resources has led to a dramatic increase in the demand for pelletizing biomass that can be burned for domestic use, mainly for residential heating or for substitution of coal or other fossil fuels in thermoelectric power plants.

In the European Union - (EU) is the world's largest market for wood pellets, with production mainly concentrated in European countries, followed by the USA, Canada, and Russia; in these regions where wood pellets are produced, rainfall is mostly from fresh water. Under these conditions, wood species and other biomasses are produced at low chlorine and inorganic rates, easily framed by Enplus standards or similar for the production of wood pellets.

Considering the decarbonization targets of EU, the continued growth of the world market for wood pellets tends to increase, and to meet the demand will be necessary for the inclusion of emerging countries from which potential countries of Oceania, Asia, Africa and Latin America, especially Brazil and other similar countries, have a strong vocation in the sustainable production of genus Eucalyptus ssp., which presents in Brazil productivity between 30% and 50% superior to any country in the world, becoming the ideal species for scale production of wood pellets for energy. The central problem is that these regions, unlike current main producers, are located in the tropical zone of the planet that, although evidencing favorable edaphoclimatic conditions for biomass production, which present precipitation of water coming mainly from the ocean, containing chlorine, in their high rates (NaCI), besides other inorganic compounds that are deposited in the soil, being absorbed into the biomass during the growth process, consequently also in the wood of Eucalyptus ssp., that during the burning of biomass fuel in the natural form, toxic substances that cause environmental and health problems and also economic losses due to corrosion of equipment, factors that impede certification of compliance with requirements of Enplus and similar standards, which define quality and sustainability standards for wood pellets in the European and/or international markets.

In Brazil, the chlorine content of eucalyptus wood is on average five times higher than that permitted by the Enplus standards for wood pellets for residential use and the presence of other inorganic products also result after high ash content combustion, which can reach up to four times the value allowed from ENplus standard.

The solution of problems described above would broaden the potential for the productive use of sustainable eucalyptus forests in Brazil and in similar tropical regions to use of eucalyptus as biomass for the production of energy in the form of pellets and others, reaching international standards, allowing the supply of the growing residential and industrial demand of this biofuel, providing global economic and environmental benefits.

Currently, there are not available technologies for inorganic extraction of eucalyptus biomass, a fact that implies in the difficulty for the economic production of eucalyptus for energy purposes in the world. The few techniques for inorganic extraction are for biomass in general, without considering specificities of the genus Eucalyptus ssp., and present limitations requiring treatment of biomass with thermal processes, often by adding various inputs, resulting in costs greater than those afforded by this invention.

The generic treatment of biomass without considering the specific anatomical structure of eucalyptus in various stages of growth has produced deficient results through existing processes, a limitation that is overcome by the present invention.

The object of the present invention is to remove chlorine and other inorganic materials, such as alkali metals, from wood of the genus Eucalyptus ssp., In order to allow the production of solid biofuels in the form of wood pellets and other Enplus standard and similar, thus allowing commercialization in the European and international market.

The method of this invention comprises the hydromechanical pretreatment, applied before the pelletization of the biomass of different ages and different types of forest plantation, providing in addition to the exclusive use of young wood its combination with adult eucalyptus wood in proportion which allows compliance with the provisions of the applicable standard regarding the chlorine and other inorganic content present in the solid biofuel.

In the method of this invention, the eucalyptus wood is, in the first stage, mechanically pretreated with traditional wood chippers equipment, reduced in the form of the fine woodchip with a mean diameter of 3mm, and then in the second stage, it is fractionated with hammer mills or similar, and sieved to a granulometric size of approximately 0.177 mm - 0.297 mm, equivalent to 48 - 80 mesh Tyler, in order to allow the exposure of a larger contact area of the tracheids and parenchyma of the wood, as well as to provide the ideal size for pelletization, after the mechanical pretreatment, the wood passes through a simple washing process with Milli-Q deionized water preferably (electrical conductivity <1 microsiemens per cm -1), at ambient temperature, and may vary from 12 to 36 °C, using the ratio of solid biomass per water wich may vary from 10g/0.5L to 100g/0.5L, for a period of time ranging from a maximum of 5 minutes to 24 hours of permanence, and, after the leaching phase the material is dried to air or in thermomechanical dryers, resulting in the application of these procedures in material with low index or nonexistent of chlorine, and with a reduction of alkali metal content close to 10% of the initial material, providing for compliance with the limit defined by Enplus standards or similar.

The procedures of mechanical treatment and washing, as well as the results, described in the previous item, were applied for proof of concept, at the laboratory level, simulating real conditions on a large scale. The results obtained in the laboratory, submitted to chloride test in selective ion chromatography showed that the chlorine rates of the pre-treated material were eliminated. The analysis of the determination of the alkali metal concentration, obtained by a thermogravimetric analyzer up to 800 °C, verified the 90% reduction of the ash rates compared to the untreated material.

The process of this invention results in the elimination or reduction to levels acceptable by the chlorine emission standards, thus preventing the formation of dioxins, mutagenic toxic gases harmful to human health, and providing substantial alkali metals elimination thereby reducing ash formation, and reducing the corrosion of combustion equipment for energy production with solid biofuels.

After the hydromechanical pretreatment process of Eucalyptus ssp. wood from planted forests of different ages and management, the resulting material was found to have rates (<0.02%) of chlorine, containing alkali metals with ash formation of (<0.3%), presenting ideal physical characteristics for the pelletizing process, thus providing the production of solid biofuel in the form of pellets or another similar form, using as an input biomass from juvenile wood combined or not with adult wood, with compliance with the limits of chlorine and other inorganic content defined by the Enplus standard and similar for the commercialization of wood pellets.

## Claims

1. Method for removing chlorine and inorganic components from Eucalyptus SSP. wood for producing solid biofuel, in the form of "pellets" or some other form **characterized in that** it is a method for the removal of inorganic substances from the wood of the genus Eucalyptus ssp, prior to the production of the pellets or another solid biofuel, including the following steps: a) mechanical pretreatment of Eucalyptus ssp. wood, initially reduced in the form of a fine wood chips with a particle size of about 3.0 mm, sequentially fractionated and sieved to a granulometric size of 0.177 mm - 0.297 mm b) leaching of mechanically pretreated wood using water having a ratio of solid biomass and water ranging from 10 grams of wood per 0.5 liters of water to 100 grams of wood per 0.5 liters of water at ambient temperature which may vary from 12 ° C to 36 ° C for a residence time of maximum 5 minutes to 24 hours.

2. Method for removing chlorine and inorganic components from Eucalyptus SSP. wood for producing solid biofuel, in the form of "pellets" or some other form according to claim 1, **characterized by** the application of mechanical pretreatment and leaching to juvenile wood material exclusively or in combination with adult wood material of the genus Eucalyptus ssp.

3. Method for removing chlorine and inorganic components from Eucalyptus SSP. wood for producing solid biofuel, in the form of "pellets" or some other form according to claim 1, **characterized by** the material subjected to mechanical pretreatment and leaching from planted forests of different ages and different type of silvicultural management.

4. Method for removing chlorine and inorganic components from Eucalyptus SSP. wood for producing solid biofuel, in the form of "pellets" or some other form according to claim 1, **characterized by** material subjected to mechanical pretreatment using wood chippers equipment and hammer mills for wood or another similar wood chopper machine.

5. Method for removing chlorine and inorganic components from Eucalyptus SSP. wood for producing solid biofuel, in the form of "pellets" or some other form according to claim 1, **characterized by** material leached using Milli-Q deionized water, preferably with electrical conductivity <1 microsiemens per cm⁻¹.

6. Method for removing chlorine and inorganic components from Eucalyptus SSP. wood for producing solid biofuel, in the form of "pellets" or some other form according to claim 1, **characterized by** resultant material after the mechanical pretreatment process and leaching are dried in the atmospheric air.

7. Method for removing chlorine and inorganic components from Eucalyptus SSP. wood for producing solid biofuel, in the form of "pellets" or some other form according to claim 1, **characterized by** resultant material after the mechanical pretreatment process and leaching are dried using thermomechanical driers.

8. Method for removing chlorine and inorganic components from Eucalyptus SSP. wood for producing solid biofuel, in the form of "pellets" or some other form according to claim 1 and 3, **characterized by** rates of chlorine (<0.02%) and ash (<0.3%), which makes it possible to attend to the Enplus or similar standards.
